# EUROPÄISCHE PATENTSCHRIFT

(11) **EP 1 422 089 B1**
(45) Veröffentlichungstag und Bekanntmachung des Hinweises auf die Patenterteilung: **05.03.2008**
(21) Anmeldenummer: 03025581.4
(22) Anmeldetag: 08.11.2003
(51) Int. Cl.: B60H 3/00

(54) **Verfahren zur Bekämpfung von Gerüchen und/oder Schadstoffen im Fahrzeuginnenraum**
Method for preventing odours and/or pollutants in the passenger compartment of a vehicle
Méthode de prévention des odeurs et/ou des polluants dans un habitacle d'automobile

(30) Priorität: 22.11.2002 DE 10254496
(43) Veröffentlichungstag der Anmeldung: 26.05.2004
(73) Patentinhaber: Bayerische Motoren Werke Aktiengesellschaft, 80809 München (DE)
(72) Erfinder: Tille, Thomas, Dr., 81673 München (DE)

(56) Entgegenhaltungen:
- WO-A-96/37280
- DE-A- 3 526 462
- DE-A- 3 537 818
- DE-A- 4 414 594
- DE-A- 19 753 733
- DE-U- 29 901 070

## Beschreibung

Die Erfindung bezieht sich auf ein Verfahren zur Bekämpfung von Gerüchen und/oder Schadstoffen im Fahrzeuginnenraum nach dem Oberbegriff des Patentanspruchs 1.

Aus der DE 44 14 594 A1 ist ein Verfahren bekannt, bei dem die Lüftungsklappen eines Lüftungssystems von z. B. Fahrzeugen mit Hilfe von Sensoren derart gesteuert werden, dass die Luftzufuhr immer dann unterbrochen wird, wenn das Fahrzeug eine Zone erhöhter Schadstoffbelastung durchfährt. Hierbei wird die Ventilation auf Umluftbetrieb sensorgesteuert geschaltet, mit dem nützlichen Effekt, dass die mit Geruchs- und/oder Schadstoffen angereicherte Außenluft nicht in den Fahrzeuginnenraum gelangt. Zum Erkennen der Schadstoffe werden verschiedene Sensoren eingesetzt. In der eingangs genannten Schrift ist vorgeschlagen worden, die Tatsache zu nutzen, dass oxidierbare Gase den elektrischen Widerstand von Metalloxid-Sensoren verringern und dass reduzierbare Gase den elektrischen Widerstand von Metalloxidsensoren erhöhen. Das beschriebene Verfahren wertet die gasinduzierten Signale des Sensors dynamisch aus und löst dann einen Lüftungsklappen schließenden Impuls aus, wenn Benzin- oder Dieselabgase auftreten.

Mit diesem Verfahren werden maximal zwei Schadstoffe erkannt, die von Benzin- oder Dieselmotoren. Eine Vielzahl von Gerüchen und Schadstoffen in der Außenluft wird von den heute bekannten und eingesetzten Systemen nicht erfasst. Nachteilig an diesem Verfahren ist weiter, dass Geruchs- und/oder Schadstoffe, die bereits in den Fahrzeuginnenraum eingedrungen sind, nicht mehr erkannt werden, und folglich kein Verfahren für die Bekämpfung eingesetzt werden kann.

Aus der DE 197 53 733 A1 ist ein Verfahren zum Betrieb einer fahrbetriebsunabhängigen Heiz- und/oder Klimaeinrichtung, soggenannte Standheizungen bzw. Standklimatisierungen, bekannt. Während des Betriebs der Einrichtung ist ein Schadstoff-Sensor für die dem Fahrzeuginnenraum zugeführte Frischluft aktiviert und die Einrichtung wird abgeschaltet, wenn der Sensor eine Zunahme der Schadstoffkonzentration feststellt. In diesem Verfahren wird zwar die Schadstoffkonzentration im Fahrzeuginnenraum (bzw. die Schadstoffkonzentration der dem Fahrzeuginnenraum zugeführten Frischluft) gemessen, aber nur im Hinblick auf die Heiz- und/oder Klimaeinrichtung. Wird eine erhöhte Schadstoffkonzentration gemessen, muss die Einrichtung abgeschaltet werden. Es werden keine Reinigungsmaßnahmen im Fahrzeuginnenraum durchgeführt.

Aus der DE 35 26 462 A1 ist ein Verfahren zur Kontrolle der Lüftgüte in Kraftfahrzeugen bekannt. Mittels eines Sensors zur Erfassung von Schadstoffen in der Außenluft wird ein Lüftungssystem derart angesteuert, dass beim Erfassen von Schadstoffen bzw. einem erhöhten Schadstoffpegel in der Außenluft die Lüftungsklappen geschlossen werden. Sobald der Schadstoffpegel der Außenluft einen vorgegebenen Wert überschreitet, die Lüftungsklappen also geschlossen sind, wird der Wert eines Innenraumsensors mit dem Wert des Außenluftsensors verglichen. Die aufgrund der Luftqualität der Außenluft geschlossenen Lüftungsklappen werden wieder geöffnet, sobald der Schadstoffgehalt im Fahrzeuginnenraum größer ist als der Schadstoffgehalt außerhalb des Fahrzeugs.

Aufgabe der Erfindung ist, ein Verfahren zu schaffen, durch das die Luftqualität im Fahrzeuginnenraum weiter verbessert wird.

Diese Aufgabe wird erfindungsgemäß durch ein Verfahren nach Patentanspruch 1 gelöst. Vorteilhafte Weiterbildungen sind die Gegenstände der abhängigen Patentansprüche.

Bei dem erfindungsgemäßen Verfahren zur Bekämpfung von Gerüchen und/oder Schadstoffen im Fahrzeuginnenraum wird mittels eines Sensors zur Erfassung von Gerüchen und/oder Schadstoffen in der Außenluft ein Lüftungssystem mit Lüftungsklappen derart gesteuert, dass beim Erfassen von Gerüchen und/oder Schadstoffen in der Außenluft die Lüftungsklappen geschlossen werden. Zusätzlich wird mittels zumindest eines Luftqualitätssensors zur Erfassung von Gerüchen und/oder Schadstoffen im Fahrzeuginnenraum das Lüftungssystem derart gesteuert, dass beim Erfassen von Gerüchen und/oder Schadstoffen im Fahrzeuginnenraum die Lüftungsklappen des Lüftungssystems unabhängig vom Signal des Sensors zur Erfassung von Gerüchen und/oder Schadstoffen in der Außenluft geöffnet werden.

Gerüche und Schadstoffe, die maßgeblich die Qualität der Außenluft in verkehrstypischen Situationen beeinflussen, werden derzeit durch einen Außenluftqualitätssensor detektiert. Durch die Steuerung oder auch Regelung des Lüftungssystems gelangen Gerüche und Schadstoffe (derzeit CO und NOₓ zur Erfassung von Benzin- und Dieselabgasen) durch die Schließung der Lüftungsklappen nicht oder nur bedingt in den Fahrzeuginnenraum. Vorzugsweise wird ein Außenluft-Sensor verwendet, durch den weitere Gerüche und/oder Schadstoffe (Gase), wie z. B. NH₃ und C₂H₅SH detektiert werden können, wodurch eine repräsentativere Steuerung des automatischen Umluftbetriebes ermöglicht wird.

Neben den Schadstoffen, die trotz Schließung der Lüftungsklappen in den Fahrzeuginnenraum gelangen, werden auch Gerüche und Schadstoffe (z. B. HCHO, CH₃CHO, VOC, CO) im Fahrzeuginnenraum durch z. B. Bioeffluentien der Fahrzeuginsassen, Nahrungsmittel, Tabakrauch und/oder Kunststoffausdünstungen des Interieurs erzeugt. Diese Gerüche und Schadstoffe können einen Komfortverlust und Gesundheitsschädigungen der Fahrzeuginsassen erzeugen. Werden nun Geruchs- und/oder Schadstoffe durch zumindest einen Luftqualitätssensor im Fahrzeuginnenraum erkannt, werden die Lüftungsklappen erfindungsgemäß geöffnet, damit ein Luftaustausch mit der Außenluft stattfinden kann.

Vorteilhafterweise ist der Luftqualitätssensor ein CO₂-Sensor Der CO₂-Gehalt wird im Fahrzeuginnenraum durch die Aus-Atemluft der Insassen erhöht, kann aber auch durch Leckagen z. B. von CO₂-Klimaanlagen ansteigen. Die Detektion und ggf. Reduktion des Schadstoffs CO₂ dient der Vorbeugung vor Ermüdung und Konzentrationsschwäche der Fahrzeuginsassen. Zur sensorbasierten Detektion des CO₂-Gehaltes können Infrarotgassensoren (IR) eingesetzt werden.

Ebenfalls vorteilhaft ist ein Sensor zur Erfassung verschiedener Geruchs- und/oder Schadstoffmuster als Luftqualitätssensor. Zur sensorbasierten Detektion von Gerüchen und/oder Schadstoffen in der Innenraumluft können verschiedene Prinzipien eingesetzt werden, die nachfolgend als "E-Nose" (Elektronische Nase) bezeichnet werden. Hierbei ist zum einen die Verwendung von Metalloxid-Halbleitern (MO) möglich, bei denen Oberflächenreaktionen gasförmiger Moleküle zur Änderung der Ladungsverteilung an der Oberfläche des Metalloxids und damit zu einer Änderung der elektrischen Leitfähigkeit führen. Als weiteres Prinzip kann man piezoelektrisch erzeugte O-berflächenwellen (SAW) nutzen oder leitfähige Polymere (CPS), die eine Verbindung aus leitfähiger Substanz und gas-sensitivem Polymer sind. Ein weiteres Prinzip, die Quarz-Mikrowaage (QMB), basiert auf der Anregung eines beschichteten Kristalls in einem elektrischen Schwingkreis auf seine Resonanzfrequenz. Weitere Sensorprinzipien sind gassensitive MOSFETs, optische Sensoren und bspw. Hybrid-Systeme.

Zur Geruchs- und/oder Schadstofferkennung bzw. -bewertung kann eine Musterextraktion und -klassifizierung des substanz- und konzentrationsabhängigen Sensorsignals durchgeführt werden.

Im Gegensatz zum CO₂-Sensor, der eine quantitative Messung vornimmt, misst der Sensor zur Erfassung von Geruchs- und/oder Geschmacksmuster nur qualitativ. Falls der CO₂-Gehalt eine vorgegebene Schwelle überschreitet, sendet der CO₂-Sensor ein Signal zur Einleitung geeigneter Maßnahmen zur Bekämpfung des CO₂-Gehalts in der Fahrzeuginnenraum-Luft. Der Sensor zur Erfassung von Geruchs- und/oder Schadstoffmuster kann diese nur erkennen, aber nicht den Gehalt in der Fahrzeuginnenraum-Luft messen.

Besonders vorteilhaft ist das erfindungsgemäße Verfahren, wenn ein CO₂-Sensor als erster und ein Sensor zur Erfassung verschiedener Geruchs- und/oder Schadstoffmuster als zweiter Luftqualitätssensor verwendet wird.

Wenn nun mittels des CO₂-Sensors keine CO₂-Konzentration gemessen wird bzw. der CO₂-Gehalt unter der vorgegebenen Schwelle liegt und mittels des Sensors zur Erfassung von Geruchs- und/oder Schadstoffmuster Gerüche und/oder Schadstoffe gemessen werden und wenn mittels des Außenluft-Sensors Gerüche und/oder Schadstoffe gemessen werden, wird die Öffnung der Luftklappen erfindungsgemäß unterdrückt, um zu vermeiden, dass schadstoff- und/oder geruchsbelastete Luft in den Fahrzeuginnenraum dringt. Die Fahrzeuginnenraum-Luft wird von den vorhandenen Gerüchen und/oder Schadstoffen vorteilhafterweise mit zusätzlichen Reinigungssystemen aktiv entsprechend dem jeweils erkannten Geruchs- und/oder Schadstoffmusters gereinigt, d. h. die Gerüche und/oder Schadstoffe werden bekämpft. Da CO₂ mit derartigen Reinigungsmaßnahmen nicht abgebaut werden kann (CO₂ kann nur durch Photosynthese zersetzt werden), ist beim Erfassen von CO₂ ein Öffnen der Lüftungsklappen und/oder anderer Lüftungsöffnungen unbedingt notwendig.

Bei der aktiven Reinigung der Fahrzeuginnenraum-Luft werden die Gerüche und/oder Schadstoffe chemisch zersetzt. Vorzugsweise werden als Reinigungssystem ein Ozongenerator und/oder ein Photokatalyse-System verwendet. Der Ozongenerator liefert O₃-Moleküle, die zum Zersetzen ein Sauerstoff-Atom an die chemische Verbindung von Gerüchen und/oder Schadstoffen abgeben. Reiner Sauerstoff (O₂) und unschädliche/geruchsneutrale Verbindungen bleiben übrig. Bei dem Photokatalyse-System führt Licht zur Bildung von getrennten Ladungsträgern in einem Photokatalysator. Diese Ladungsträger gelangen an die Oberfläche des Katalysators; Elektronen werden auf einen adsorbierten Akzeptor übertragen und organische Geruchs- und Schadstoffe reagieren an dieser geladenen Oberfläche. Durch Anwendung dieser Verfahren ist eine Geruchsneutralisierung und Schadstoffreduktion bzw. -elimination im Fahrzeuginnenraum möglich.

Es wäre auch denkbar, beim Erfassen von Gerüchen und/oder Schadstoffen im Fahrzeuginnenraum, die auf z. B. einen Kabelbrand schließen fassen, ein optisches oder akustisches Signal auszulösen, das den Fahrer darauf aufmerksam macht.

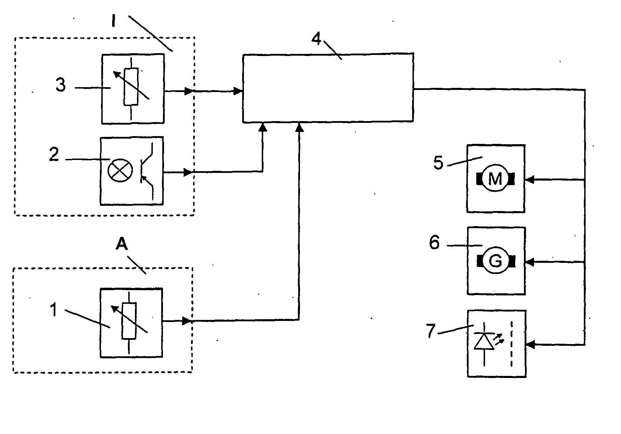

In der Zeichnung ist ein Ausführungsbeispiel der Erfindung dargestellt.

Sie zeigt eine Prinzipskizze für eine mögliche Vorrichtung zur Durchführung des erfindungsgemäßen Verfahrens. Im Fahrzeugaußenraum A wird ein Au-ßenluft-Sensor 1 zur Erfassung von Gerüchen und/oder Schadstoffe in der Außenluft verwendet. Im Fahrzeuginnenraum I ist ein CO₂-Sensor 2 als erster Luftqualitätssensor zur Erfassung des CO2-Gahalts im Fahrzeuginnenraum I und eine E-Nose 3 als zweiter Luftqualitätssensor zur Erfassung von Geruchs- und/oder Schadstoffmuster vorgesehen. Die Signale des Außenluft-Sensors 1 und der Luftqualitätssensoren 2 und 3 werden in einer Steuereinheit 4 ausgewertet. Solange kein Geruch und/oder Schadstoff im Fahrzeuginnenraum I erkannt wird, werden die Lüftungsklappen 5 des Lüftungssystems geschlossen, wenn im Fahrzeugaußenraum A ein Geruch und/oder Schadstoff erkannt wird. Sobald ein Geruch und/oder Schadstoff im Fahrzeuginnenraum erkannt wird, werden die Lüftungsklappen 5 unabhängig vom Fahrzeugaußenraum-Sensorsignal geöffnet.

Nur wenn eine CO₂-Konzentration im Fahrzeuginnenraum I, die durch den CO₂-Sensor gemessen wird, keine vorgegebene Schwelle überschreitet und die E-Nose 3 ein Geruchs und/oder Schadstoffmuster detektiert und zusätzlich im Fahrzeugaußenraum A ein Geruch und/oder Schadstoff erkannt wird, bleiben die Luftklappen 5 geschlossen. Der Geruch und/oder Schadstoff wird mit zusätzlichen Reinigungsmaßnahmen bekämpft. Hierzu werden der Ozongenerator 6 und/oder das Photokatalyse-System 7 eingesetzt.

Es ist auch möglich, diese zusätzlichen Reinigungssysteme für eine schnellere Bekämpfung von Gerüchen und/oder Schadstoffen im Fahrzeuginnenraum einzusetzen, wenn die Luftklappen 5 infolge eines Geruchs und/oder eines Schadstoffs im Fahrzeuginnenraum I geöffnet sind. Weiter besteht die Möglichkeit, den Ozongenerator 6 ständig auf einen vorgegebenen Grundwert in Betrieb zu halten, damit sich z. B. keine Keime an der Kühlung einer Klimaanlage festsetzen können, und zur aktiven Reinigung diesen Grundwert um einen variablen Offset-Wert zu erhöhen.

## Patentansprüche

1. Verfahren zur Bekämpfung von Gerüchen und/oder Schadstoffen im Fahrzeuginnenraum (I), bei dem mittels eines Sensors (1) zur Erfassung von Gerüchen und/oder Schadstoffen in der Außenluft ein Lüftungssystem mit Lüftungsklappen (5) derart gesteuert wird, dass beim Erfassen von Gerüchen und/oder Schadstoffen in der Außenluft die Lüftungsklappen (5) geschlossen werden und bei dem mittels zumindest eines Luftqualitätssensors (2, 3) zur Erfassung von Gerüchen und/oder Schadstoffen im Fahrzeuginnenraum (I) das Lüftungssystem derart gesteuert wird, dass beim Erfassen von Gerüchen und/oder Schadstoffen im Fahrzeuginnenraum (I) die Lüftungsklappen (5) geöffnet werden, **dadurch gekennzeichnet, dass** beim Erfassen von Gerüchen und/oder Schadstoffen im Fahrzeuginnenraum (I) die Lüftungsklappen (5) des Lüftungssystems unabhängig vom Signal des Sensors (1) zur Erfassung von Gerüchen und/oder Schadstoffen in der Außenluft (A) geöffnet werden.

2. Verfahren nach Patentanspruch 1, **dadurch gekennzeichnet, dass** ein Luftqualitätssensor ein CO₂-Sensor (2) ist.

3. Verfahren nach Patentanspruch 1, **dadurch gekennzeichnet, dass** ein Luftqualitätssensor ein Sensor zur Erfassung verschiedener Geruchs- und/oder Schadstoffmuster (3) ist.

4. Verfahren nach Patentanspruch 1, **dadurch gekennzeichnet, dass** ein erster Luftqualitätssensor ein CO₂-Sensor (2) ist und ein zweiter Luftqualitätssensor ein Sensor zur Erfassung verschiedener Geruchs- und/oder Schadstoffmuster (3) ist.

5. Verfahren nach einem der Patentansprüche 2 bis 4, **dadurch gekennzeichnet, dass** die Öffnung der Lüftungsklappen (5) unterdrückt wird, wenn mittels des CO₂-Sensors (2) kein CO₂ gemessen wird und mittels des Sensors zur Erfassung von Geruchs- und/oder Schadstoffmuster (3) Gerüche und/oder Schadstoffe gemessen werden und mittels des Außenluft-Sensors (1) Gerüche und/oder Schadstoffe gemessen werden.

6. Verfahren nach einem der Patentansprüche 1 bis 5, **dadurch g**ekennzeichnet, dass zumindest ein zusätzliches Reinigungssystem im Kraftfahrzeug derart gesteuert wird, dass bei einer Erfassung zumindest eines Geruchs- und/oder Schadstoffmusters' im Fahrzeuginnenraum (I) die Fahrzeuginnenraum-Luft aktiv entsprechend des Geruchs- und/oder Schadstoffmusters gereinigt wird.

7. Verfahren nach Patentanspruch 6, **dadurch gekennzeichnet, dass** das Reinigungssystem ein Ozongenerator (6) und/oder ein Photokatalyse-System (7) ist.

## Claims

1. A method for controlling odours and/or pollutants in the passenger compartment (I) of a vehicle, wherein a sensor (1) for detecting odours and/or pollutants in the outside air controls a ventilation system having vents (5) such that the vents (5) are closed when odours and/or pollutants are detected in the outside air and wherein at least one air quality sensor (2, 3) for detecting odours and/or pollutants in the passenger compartment (I) controls the ventilation system such that the vents (5) are opened when odours and/or pollutants are detected in the passenger compartment (I), **characterised in that** when odours and/or pollutants are detected in the passenger compartment (I), the vents (5) of the ventilation system are opened independently of the signal from the sensor (1) for detecting odours and/or pollutants in the outside air (A).

2. A method according to claim 1, **characterised in that** one air quality sensor is a CO₂ sensor (2).

3. A method according to claim 1, **characterised in that** one air quality sensor is a sensor (3) for detecting various odour and /or pollutant samples.

4. A method according to claim 1, **characterised in that** a first air quality sensor is a CO₂ sensor (2) and a second air quality sensor is a sensor (3) for detecting various odour and/or pollutant samples.

5. A method according to claims 2 to 4, **characterised in that** opening of the vents (5) is suppressed if the CO₂ sensor (2) does not measure any CO₂ and the sensor (3) for detecting odour and/or pollutant samples measures odours and/or pollutants and the outside air sensor (1) measures odours and/or pollutants.

6. A method according to any one of claims 1 to 5, **characterised in that** at least one additional purification system in the vehicle is controlled such that upon detection of at least one odour and/or pollutant sample in the passenger compartment (I), the air in the passenger compartment is actively purified in accordance with the odour and/or pollutant sample.

7. A method according to claim 6, **characterised in that** the purification system is an ozone generator (6) and/or a photocatalysis system (7).

## Revendications

1. Procédé pour lutter contre les odeurs et/ou les polluants dans l'habitacle (I) d'un véhicule, selon lequel un capteur (1) pour la détection d'odeurs et/ou de polluants dans l'air extérieur commande un système de ventilation à clapets de ventilation (5) de manière à les (5) fermer lorsque des odeurs et/ou des polluants sont détectés dans l'air extérieur, et avec au moins un capteur de qualité de l'air (2, 3) pour détecter des odeurs et/ou des polluants dans l'habitacle (I), on commande le système de ventilation de manière à ce que les volets de ventilation (5) s'ouvrent en cas de détection d'odeurs et/ou de polluants dans l'habitacle (I),
**caractérisé en ce que**
lors de la détection d'odeurs et/ou de polluants dans l'habitacle (I), les volets de ventilation (5) du système de ventilation s'ouvrent indépendamment du signal du capteur (1) de détection d'odeurs et/ou de polluants dans l'air extérieur (A).

2. Procédé selon la revendication 1,
**caractérisé en ce qu'**
un capteur de qualité de l'air est un capteur de CO₂ (2).

3. Procédé selon la revendication 1,
**caractérisé en ce qu'**
un capteur de qualité de l'air est un capteur de détection de différents modèles d'odeurs et/ou de polluants (3).

4. Procédé selon la revendication 1,
**caractérisé en ce qu'**
un premier capteur de qualité de l'air est un capteur de CO₂ (2) et un deuxième capteur de qualité de l'air est un capteur de détection de différents modèles d'odeurs et/ou de polluants (3).

5. Procédé selon l'une quelconque des revendications 2 à 4,
**caractérisé en ce que**
l'ouverture des volets de ventilation (5) est supprimée lorsqu'on ne mesure pas de CO₂ avec le capteur de CO₂ (2) et lorsqu'on mesure des odeurs et/ou des polluants avec le capteur de détection de modèles d'odeurs et/ou de polluants (3) et des odeurs et/ou des polluants avec le capteurs d'air extérieur (1).

6. Procédé selon l'une quelconque des revendications 1 à 5,
**caractérisé en ce qu'**
au moins un système de purification supplémentaire est commandé, dans le véhicule automobile, de manière à ce que l'air à l'intérieur du véhicule soit activement purifié en fonction du modèle d'odeurs et/ou de polluants en cas de détection d'au moins un modèle d'odeurs et/ou de polluants dans l'habitacle (I).

7. Procédé selon la revendication 6,
**caractérisé en ce que**
le système de purification est un générateur d'ozone (6) et/ou un système de photocatalyse (7).
